# EUROPÄISCHE PATENTSCHRIFT

(11) **EP 2 330 372 B1**
(45) Veröffentlichungstag und Bekanntmachung des Hinweises auf die Patenterteilung: **03.09.2014**
(21) Anmeldenummer: 10016239.5
(22) Anmeldetag: 13.07.2009
(51) Int. Cl.: F27B 5/14, F27B 5/16, C21D 1/74, C21D 9/00, F27D 11/02

(54) **Elektrisch beheizter Retortenofen zur Wärmebehandlung von metallischen Werkstücken**
Electrically heated retort furnace for thermal treatment of metallic workpieces
Four à cornue chauffé électriquement pour le traitement thermique de pièces usinées métalliques

(30) Priorität: 24.07.2008 DE 202008009980 U; 08.08.2008 DE 202008010550 U; 22.08.2008 DE 202008011194 U
(43) Veröffentlichungstag der Anmeldung: 08.06.2011
(62) Teilanmeldung aus: 09775949.2
(73) Patentinhaber: Ipsen International GmbH, 47533 Kleve (DE)
(72) Erfinder: Sarres, Rolf, 46147 Oberhausen (DE); Schwall, Heinz, Dr., 52249 Eschweiler (DE)

(56) Entgegenhaltungen:
- DE-A1- 2 126 474
- US-A- 4 854 863

## Beschreibung

### Technisches Gebiet

Die Erfindung betrifft einen elektrisch beheizten Retortenofen zur Wärmebehandlung, wie z. B. zum Blankanlassen, Glühen unter Stickstoff oder Stickstoff/Wasserstoff, Nitrieren oder Nitrokarburieren von metallischen Werkstücken, wobei der Retortenofen ein Ofengehäuse mit Retorte, eine Heizeinrichtung und eine Umwälzeinrichtung umfaßt.

### Stand der Technik

**Es wurde schon in** DE 21 26 474 A1 **ein Elektroofen für komplexe Wärme- und Thermobehandlungen mit Isothermzyklus beschrieben, bei dem der Ofen aus einer Metallkonstruktion mit feuerfester Ausmauerung besteht, in welchem eine Retorte zur Aufnahme der wärmezubehandelnden Werkstücke eingesetzt ist. Zur Einhaltung eines geregelten Arbeitsatmosphärendruckes sind danach einerseits gesteuerte elektrische Widerstände zur Beheizung und andererseits regelbare Kühler zum Einführen von Kühlluft zwischen der Retorte und Ofenwandung bereits bekannt.**

**Derartig beheizte und betriebene Öfen wurden als so bezeichnete Retortenöfen weiterentwickelt.**

**Beispielsweise wird in** US 4,854,863 A **offenbart, einen derartigen Ofen mit einem die Retorte versorgenden Gasstrom heizend zu betreiben, welcher Gasstrom innerhalb der Retorte umgewälzt wird.**

**Derartige** Retortenöfen zur Wärmebehandlung von metallischen Werkstücken sind **weiterhin** nach dem Stand der Technik in vielfältigen Anordnungen, wie z. B. gemäß DE-AS 2 010 433, DE- OS 27 54 034, DE 30 28 952 C2, DE 31 43 532 A1, DE 36 31 389 C2 und DE 103 38 431 A1 bekannt.

Bei derartigen Retortenöfen zur Wärmebehandlung von metallischen Werkstücken sind nach dem Stand der Technik vielfältige Anordnungen, wie z. B. gemäß DE-AS 2 010 433, DE- OS 27 54 034, DE 30 28 952 C2, DE 31 43 532 A1, DE 36 31 389 C2 und DE 103 38 431 A1 bekannt.

Den Heizeinrichtungen und Umwälzeinrichtungen in Retortenöfen kommt wegen der zu erzielenden gleichmäßigen Aufheizung der im Inneren der Retorte zu behandelnden Werkstücke eine besondere Bedeutung zu.

**Der Fachmann geht davon aus, daß** Retortenöfen mittels elektrischer Heizelemente oder mittels Gasbrennern beheizt werden **können**. Die Beheizungseinrichtung ist üblicherweise **nach dem ausgewerteten Stand der Technik** in dem Raum zwischen dem Ofengehäuse, das auf der Innenseite eine thermische Isolierung aufweist, und der Retorte angeordnet.

Bei Gasbrennern erzeugt die Flamme im Raum zwischen Ofengehäuse und Retorte und eine Gasströmung; in Folge dieser Gasströmung erfolgt die Beheizung der Retorte durch Strahlung und Konvektion, wodurch eine gleichmäßige Beheizung der Retorte realisiert wird.

Bei elektrisch beheizten Retortenöfen, werden die elektrischen Heizelemente ebenfalls im Raum zwischen Ofengehäuse und Retorte angeordnet. Beispielsweise sind die Heizelemente mäanderförmig ausgebildet und innen am Ofengehäuse geführt, um die im Ofenraum der Retorte zu behandelnden Werkstücke auf z.B. gewünschte 650°C gleichmäßig aufzuheizen. Die Wärmeübertragung von den Heizelementen auf die Retorte erfolgt dabei jedoch ausschließlich durch Strahlung, der konvektive Anteil der bei der Gasbeheizung zu einer Vergleichmäßigung entscheidend beiträgt, fehlt bei der elektrischen Beheizung.

Zur intensiven und das komplette Behandlungsgut erfassenden Umwälzung der Ofenatmosphäre innerhalb der Retorte werden leistungsfähige Umwälzeinrichtungen eingesetzt, deren funktionelles Zusammenspiel mit den Heizeinrichtungen wärmetechnisch abgestimmt sein muß. Somit war es nach dem Stand der Technik scheinbar vorteilhaft, die Umwälzung der Ofenatmosphäre im Ofenraum innerhalb der Retorte durchzuführen. Demzufolge wurden die entsprechenden Einrichtungen wie Umwälzaggregate und Gasführungshilfen **regelmäßig** innerhalb der Retorte eingesetzt.

### Darstellung der Erfindung

Aufgabe der Erfindung ist es, bei elektrisch beheizten Retortenöfen den Wirkungsgrad der Wärmebehandlung durch eine gleichmäßigere Aufheizung der Retorte und damit auch der Werkstückchargen, die sich innerhalb der Retorte befinden, zu erhöhen sowie durch eine möglichst gleichmäßige Beheizung der Retorte lokale Überhitzung und thermische Spannungen, welche sich negativ auf die Lebensdauer der Retorte auswirken, zu vermeiden.

Diese Aufgabe wird bei einem Retortenofen zur Wärmebehandlung von metallischen Werkstücken,
- der ein, einen ersten Volumenraum umgebendes, thermisch isoliertes Ofengehäuse mit Heizeinrichtung für die Retorte und eine erste Umwälzeinrichtung innerhalb der Retorte aufweist,
- wobei die vom ersten Volumenraum umgebene Retorte einen die Schutz- und Reaktionsgase aufnehmenden, gasdicht mittels einer Tür für die Beschickung einer Charge von Werkstücken verschließbaren Behandlungs- oder Chargenraum zur Wärmebehandlung der auf einer Chargenaufnahme befindlichen Werkstücke umschließt, erfindungsgemäß dadurch gelöst, dass
   a) die Heizeinrichtung mehrere **stabförmige, orthogonal zur Längserstreckung der Retorte ausgerichtete** Heizelemente aufweist, die im ersten Volumenraum mittels im Ofengehäuse eingelassener, verschließbarer erster Öffnungen mindestens einzeln austauschbar angeordnet sind und
   b) eine zweite Umwälzeinrichtung zur Umwälzung der Luft im ersten Volumenraum vom Ofengehäuse aufgenommen und mittels verschließbarer zweiter Öffnung als Baueinheit austauschbar angeordnet ist, wobei
   c) die Heizelemente und Umwälzeinrichtung in einer eine gleichmäßige Wärmeübertragung zur Retorte führenden Anordnung im ersten Volumenraum aufgenommen sind.

Gemäß den Ansprüchen 2 bis 4 wird die Erfindung dahingehend ausgebildet, daß die Heizelemente eine den Durchmesser der Retorte übersteigende Längserstreckung aufweisen, die Heizelemente mit Bezug auf ihre Längserstreckung einen ungeheizten wie z.B. mittleren Bereich aufweisen und/oder mindestens zwei Heizelemente je Längsseite der Retorte vorgesehen sind.

Nach den Ansprüchen 5 und 6 wird die Erfindung dadurch weitergehend ausgebildet, daß die Umwälzeinrichtung ein Umwälzaggregat und eine Leiteinrichtung aufweist und/oder die Leiteinrichtung in einer mit Bezug auf die Längserstreckung der Retorte gerichteten Querumwälzung der Luft im Ofenraum bewirkenden Anordung steht.

Die Heizeinrichtung nach dem erfindungsgemäßen Retortenofen verfügt somit über eine Vielzahl von Heizelementen. Diese sind jeweils stabförmig ausgebildet, wobei sie hinsichtlich ihrer Längserstreckung im Wesentlichen senkrecht, das heißt orthogonal zur Längserstreckung der Retorte ausgerichtet sind. Dabei kann je Retortenlängsseite eine Mehrzahl von einzelnen Heizelementen vorgesehen sein. Bevorzugt ist der Einsatz von drei stabförmigen Heizelementen je Retortenlängsseite, das heißt von insgesamt sechs Heizelementen.

Die erfindungsgemäß ausgestaltete Heizeinrichtung ermöglicht im Unterschied zu den aus dem Stand der Technik bekannten mäanderförmig ausgebildeten Heizführungen eine gleichmäßigere und damit verbesserte Aufheizung des Ofenraums, was in vorteilhafter Weise zu einer gleichmäßigeren Aufheizung der in der Retorte angeordneten, wärmezubehandelnden Werkstücke führt. Aufgrund dieser vergleichmäßigteren Aufheizung stellen sich im Wesentlichen zwei Vorteile ein. Zum einen führt die gleichmäßigere Aufheizung der Retorte zu einer im Vergleich zum Stand der Technik thermisch induzierten Minderbelastung, was zu einer längeren Lebensdauer der Retorte und damit des Retortenofens insgesamt führt. Zum anderen wird durch die gleichmäßigere Aufheizung eine gleichmäßigere Erwärmung der wärmezubehandelnden Werkstücke erzielt, was eine bessere Reproduzierbarkeit des Wärmebehandlungsergebnisses erbringt. Dabei ergibt sich aufgrund der erfindungsgemäß ausgestalteten Heizeinrichtung eine Ofenkonstruktion, die eine bestimmungsgemäße Verfahrensdurchführung in verbesserter Weise ermöglicht.

Die Retorte ist vom Ofengehäuse unter Belassung eines Spaltraumes aufgenommen. Die Heizelemente sind in diesem Spaltraum, das heißt zwischen Retorte einerseits und Innenseite des Ofengehäuses andererseits angeordnet. Dabei sind die Heizelemente bevorzugterweise parallel zueinander ausgerichtet, und verfügen über einen ersten Abschnitt, einen zweiten Abschnitt und einen zwischen erstem und zweiten Abschnitt ausgebildeten mittleren Abschnitt, der auch mittlerer Bereich genannt werden kann. Dieser mittlere Bereich der Heizelemente ist gemäß einem besonderen Merkmal der Erfindung ungeheizt. Diese Ausgestaltung erbringt den Vorteil, dass eine Überhitzung der Retorte in diesem Bereich vermieden wird, der sich deshalb einstellen könnte, weil die Heizelemente gerade in diesem Bereich der Retorte am nächsten sind.

Die Heizelemente sind austauschbar ausgebildet. Unter austauschbar" im Sinne der Erfindung ist dabei zu verstehen, dass einzelne Heizelemente für sich, das heißt unabhängig von anderen Heizelementen demontiert bzw. im Reparaturfall gegen neue Heizelemente ausgetauscht werden können. Bei den aus dem Stand der Technik bekannten Heizeinrichtungen ist dies in nachteiliger Weise nicht möglich.

Aus dem Stand der Technik ist es bekannt, die Ofenatmosphäre im Retorteninnenraum, das heißt die Atmosphäre im eigentlichen Nutz-, das heißt Behandlungsraum umzuwälzen. Mit dem erfindungsgemäßen Retortenofen wird nun vorgeschlagen, unabhängig von einer unter Umständen gegebenen Atmosphärenumwälzung im Inneren der Retorte eine Umwälzeinrichtung vorzusehen, mittels welcher die Atmosphäre des vom Ofengehäuse umschlossenen Volumenraums, das heißt die Umwälzung der die Retorte umgebenden Atmosphäre, erreicht wird. Dabei erfolgt diese Umwälzung mit der Zielsetzung, eine gleichmäßigere und damit verbesserte Aufheizung der Retorte und hierdurch bedingt eine vergleichmäßigtere Aufheizung der innerhalb der Retorte angeordneten und wärmezubehandelnden Werkstücke zu erreichen.

Diese erfindungsgemäße Ausgestaltung ist darüber hinaus insofern von Vorteil, da die aufgrund der Umwälzeinrichtung bedingte, im Unterschied zum Stand der Technik sehr viel gleichmäßigere Aufheizung der Retorte zu einer im Vergleich zum Stand der Technik auch thermischen Minderbelastung führt. Die Lebensdauer der Retorte und damit des gesamten Retortenofens wird in vorteilhafter Weise verlängert.

Die Umwälzeinrichtung verfügt gemäß einem Merkmal der Erfindung über ein Umwälzaggregat einerseits und eine Leiteinrichtung andererseits. Bei dem Umwälzaggregat kann es sich beispielsweise um einen Ventilator oder dergleichen handeln. Die Leiteinrichtung ist eine beispielsweise aus Leitblechen bestehende Baueinheit, die einer Zwangsführung der mittels des Umwälzaggregates umgewälzten Atmosphäre dient. Dabei ist bevorzugterweise vorgesehen, dass die Leiteinrichtung derart ausgebildet ist, dass es zu einer mit Bezug auf die Längserstreckung der Retorte gerichteten Querumwälzung kommt. Infolge dieser Querumwälzung, die entlang der Mantelfläche der Retorte um diese herum zirkuliert, kommt es in vorteilhafter Weise dazu, dass die umwälzte Gasatmosphäre in Längsrichtung der Heizelemente an diesen vorbeigeführt wird, so dass in optimierter Weise ein Wärmeaustausch zwischen Heizelementen einerseits und Ofenatmosphäre andererseits stattfinden kann.

Die Umwälzeinrichtung ist als modulare Baukomponente, das heißt Baueinheit ausgebildet. Sie ist in die entsprechende zweite Öffnung im Ofengehäuse eingesetzt und verfügt zur thermischen Isolierung des Ofengehäuses gegenüber der das Ofengehäuse umgebenden Atmosphäre über eine entsprechende Isolierung, die in Form beispielsweise eines Stopfens ausgebildet ist und die im Ofengehäuse ausgebildete Öffnung nach einem bestimmungsgemäßen Einbau der erfindungsgemäßen Umwälzeinrichtung thermisch verschließt, das heißt abdichtet. Aufgrund dieser Ausgestaltung ist eine einfache Montage bzw. Demontage der erfindungsgemäßen Umwälzeinrichtung möglich, was insbesondere im Reparaturfall von Vorteil ist.

Mit der Erfindung wird eine Kombination von Heizeinrichtung und Umwälzeinrichtung vorgeschlagen, die in vorteilhafter Weise zu einer einheitlichen Wirkung funktionell verschmelzen, nämlich zu einer vergleichmäßigten und damit im Vergleich zum Stand der Technik besseren Erwärmung der Retorte und damit auch zu einer verbesserten Erwärmung der in der Retorte angeordneten und wärmezubehandelnden Werkstücke.

### Kurze Beschreibung der Zeichnungen

In den zugehörigen Zeichnungen zeigen in einem Ausführungsbeispiel der Erfindung
Fig. 1 den Längsschnitt eines erfindungsgemäßen Retortenofens und
Fig. 2 den Querschnitt A-A nach Fig. 1.

### Bester Weg zur Ausführung der Erfindung

Die Erfindung wird an einem Beispiel näher beschrieben.

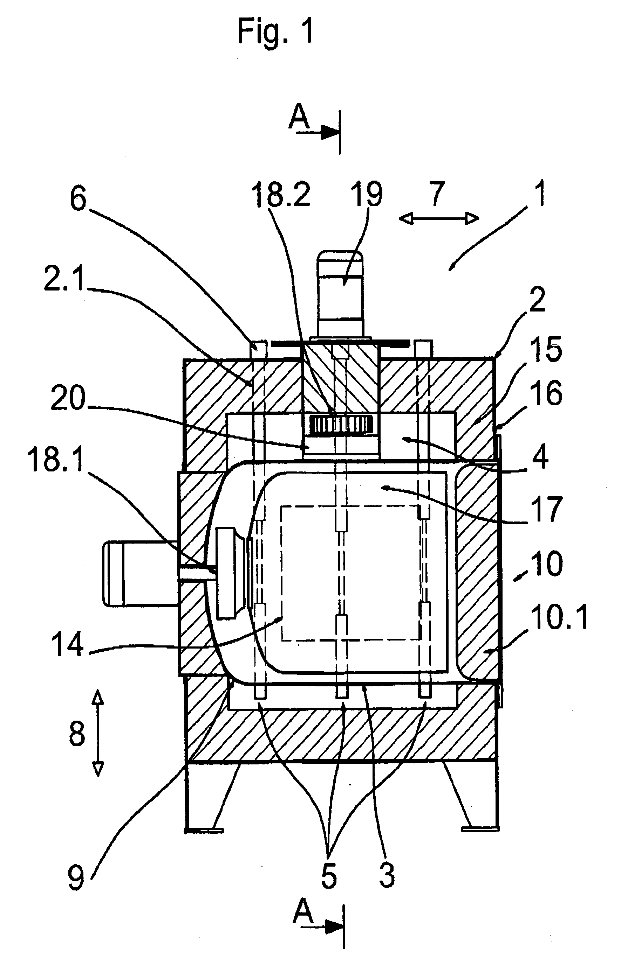

In Fig. 1 ist in einer schematischen Darstellung ein Retortenofen 1 nach der Erfindung im Längsschnitt dargestellt. Der Retortenofen 1 ist im gezeigten Ausführungsbeispiel mit horizontal ausgerichteter Retorte 3 ausgestattet, das heißt ein horizontaler Retortenofen 1.

Der Retortenofen 1 weist ein Ofengehäuse 2 mit eingelassenen, verschließbaren ersten Öffnungen (2.1) für mindestens einzeln austauschbare Heizelemente (6) auf. Das Ofengehäuse 2 umschließt einen ersten Volumenraum 4, innerhalb welchem unter anderem die Retorte 3 und eine Heizeinrichtung 5 angeordnet sind. Das Ofengehäuse 2 nimmt demnach die Retorte 3 und die Heizeinrichtung 5 auf. Der Retortenofen 1 weist weiterhin innerhalb der Retorte 3 eine erste Umwälzeinrichtung 18.1 auf.

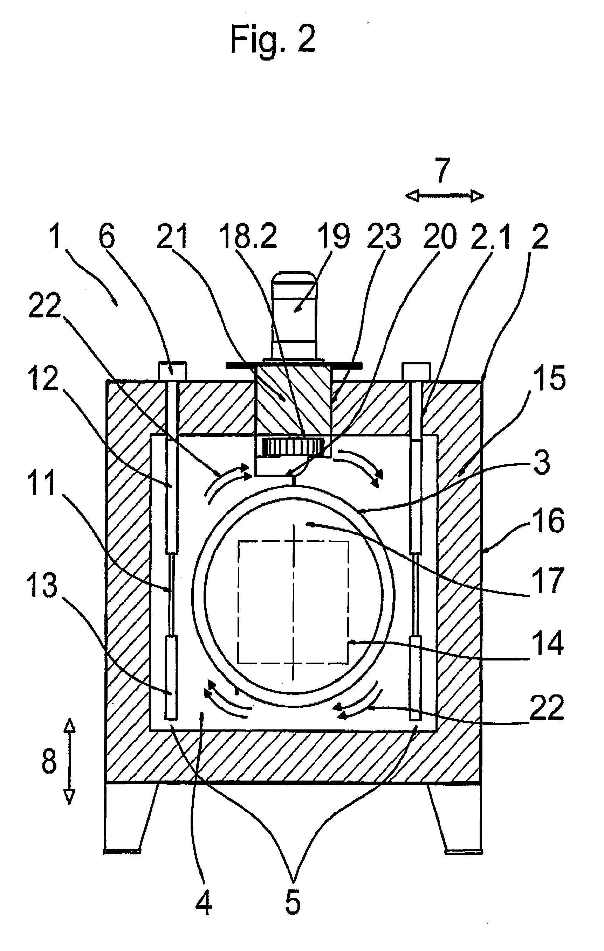

Wie insbesondere die schematische Darstellung nach Fig. 2 erkennen lässt, umfasst das Ofengehäuse 2 eine äußere Wandung 16, die innenseitig mit einer Isolation 15 versehenen ist.

Die Retorte 3 ist als zylinderförmiger Hohlkörper ausgebildet. Dieser Hohlkörper ist zu einem Ende mittels eines Bodens 9 gasdicht verschlossen. Mit Bezug auf die Zeichnungsebene nach Fig. 1 weist die Retorte 3 dem Boden 9 gegenüberliegend eine Beschickungsöffnung 10 auf, die mittels eines Deckels 10.1 gasdicht verschließbar ist. Über die Beschickungsöffnung 10 ist ein von der Retorte 3 umschlossener zweiter Volumenraum 17, der den eigentlichen Nutz-, das heißt Behandlungsraum des Retortenofens 1 darstellt, erreichbar. Über die Beschickungsöffnung 10 werden wärmezubehandelnde Werkstücke, die beispielsweise zu einer Charge 14 zusammengefasst sind, in die Retorte 3 gegeben. Ein Entladen der Retorte findet gleichfalls über die Beschickungsöffnung 10 statt.

Die vom Ofengehäuse 2 aufgenommene Heizeinrichtung 5 dient der Erwärmung des vom Ofengehäuse 2 umschlossenen ersten Volumenraums 4, der allgemein als Ofenraum bezeichnet wird. Infolge der Erwärmung des Ofenraums kommt es durch Wärmeübertragung zu einer Erwämung der Retorte 3 und damit auch zu einer Erwärmung der im Inneren der Retorte 3 angeordneten Charge 14.

Die Heizeinrichtung 5 verfügt über eine Mehrzahl oben benannter Heizelemente 6, die nach Fig. 2 jeweils stabförmig ausgebildet sind. Dabei sind die Heizelemente 6 in ihrer Längserstreckung in Längsrichtung 8 ausgerichtet, wie dies sowohl Fig. 1 als auch Fig. 2 zu entnehmen ist. Die Retorte 3 ist in ihrer Längserstreckung in Längsrichtung 7 ausgerichtet, was aus Fig. 1 entnommen werden kann.

Wie der Fig. 1 des Weiteren zu entnehmen ist, sind die Heizelemente 6 in ihrer Längserstreckung orthogonal zur Längserstreckung der Retorte 3 ausgerichtet. Dieser Zusammenhang ist auch aus Fig. 2 anschaulich zu entnehmen.

Mit Bezug auf die Bildebene nach Fig. 2 verfügt ein jedes Heizelement 6 über einen oberen Abschnitt 12 und einen unteren Abschnitt 13. Diese beiden Abschnitte sind über den mittleren Bereich 11 miteinander verbunden. Dieser mittlere Bereich 11 ist bevorzugterweise ungeheizt ausgebildet, so dass eine Überhitzung der Retorte 3 in diesem Bereich unterbunden ist.

Wie sich aus einer Zusammenschau der Fig. 1 und Fig. 2 ergibt, verfügt der erfindungsgemäße Retortenofen 1 über insgesamt sechs Heizelemente, wobei je Retortenseite jeweils drei Heizelemente vorgesehen sind, die in Längsrichtung 7 der Retorte gleichmäßig verteilt sind.

Der erfindungsgemäße Retortenofen 1 verfügt erfindungsgemäß über eine zweite Umwälzeinrichtung 18.2 außerhalb der Retorte 3. Diese besitzt ein Umwälzaggregat 19, beispielsweise in Form eines Ventilators oder dergleichen, und eine Leiteinrichtung 20. Dabei wird mittels des Umwälzaggregates 19 die im ersten Volumenraum 4 befindliche Gasatmosphäre umgewälzt, wobei die Leiteinrichtung 20 dafür Sorge trägt, dass es aufgrund der zweiten Umwälzeinrichtung 18.2 zu einer gerichteten Querströmung mit Bezug auf die Längserstreckung der Retorte 3 kommt, wie die in Fig. 2 beispielhaft eingezeichneten Pfeile 22 zeigen. Als Ergebnis dieser quer gerichteten Umwälzung strömt die mittels des Umwälzaggregates 19 umgewälzte Ofenatmosphäre in Längsrichtung der Heizelemente 6 an diesen vorbei, wobei sich im Ergebnis mit Bezug auf die Bildebene nach Fig. 2 eine um die Retorte 3 zirkulierende Strömung ergibt.

Die zweite Umwälzeinrichtung 18.2 ist in eine zweite Öffnung 23 des Ofengehäuses 2 eingesetzt. Für eine thermische Abdichtung dieser Öffnung 23 verfügt die zweite Umwälzeinrichtung 18.2 über einen Stopfen 21, der aus einem zur Isolation 15 identischen Material gebildet ist. Die gesamte zweite Umwälzeinrichtung 18.2 ist aufgrund dieser Konstruktion als modulare und kompakte Baueinheit ausgebildet, die durch einfaches Einsetzen in die zweite Öffnung 23 des Ofengehäuses 2 montierbar bzw. demontierbar ist.

Sowohl die Heizelemente 6 als auch die zweite Umwälzeinrichtung 18.2 erbringen jeweils für sich als auch in Kombination in vorteilhafter Weise eine im Unterschied zum Stand der Technik sehr viel gleichmäßigere und damit bessere Erwärmung der Retorte 3 und damit schließlich auch der im Retorteninnenraum 3 zwecks Wärmebehandlung angeordneten Charge 14. Dies bewirkt einerseits eine verlängerte Lebensdauer der Retorte 3 und anderereseits ein verbessertes Behandlungsergebnis hinsichtlich der wärmezubehandelnden Charge 14.

### Gewerbliche Anwendbarkeit

Die durch die erfindungsgemäß veränderte Anordnung von Heizeinrichtung und Umwälzeinrichtung erzielten Wirkungen schaffen eine wesentliche Gebrauchswerterhöhung und eine erhöhte Verfügbarkeit von Retortenöfen bei der anwendenden Industrie.

### Bezugszeichenliste

- 1: Retortenofen
- 2: Ofengehäuse
- 2.1: erste Öffnung
- 3: Retorte
- 4: erster Volumenraum
- 5: Heizeinrichtung
- 6: Heizelement
- 7: Längsrichtung
- 8: Längsrichtung
- 9: Boden
- 10: Beschickungsöffnung
- 10.1: Deckel
- 11: mittlerer Bereich
- 12: oberer Bereich
- 13: unterer Bereich
- 14: Charge
- 15: Isolation
- 16: Wandung
- 17: zweiter Volumenraum
- 18.1: erste Umwälzeinrichtung
- 18.2: zweite Umwälzeinrichtung
- 19: Umwälzaggregat
- 20: Leiteinrichtung
- 21: Stopfen
- 22: Pfeil
- 23: zweite Öffnung
- 24: Segment

## Patentansprüche

1. Elektrisch beheizter Retortenofen (1) zur Wärmebehandlung von metallischen Werkstücken,
■ aufweisend ein, einen ersten Volumenraum (4) umgebendes, thermisch isoliertes Ofengehäuse (2) mit Heizeinrichtung (5) für die Retorte (3) und eine erste Umwälzeinrichtung (18.1) innerhalb der Retorte,
■ wobei die vom ersten Volumenraum (4) umgebene Retorte (3) einen die Schutz- und Reaktionsgase aufnehmenden, gasdicht mittels einer Tür für die Beschickung einer Charge (14) von Werkstücken verschließbaren zweiten Volumenraum (17) als Behandlungs- oder Chargenraum zur Wärmebehandlung der auf einer Chargenaufnahme befindlichen Werkstücke umschließt,
**dadurch gekennzeichnet, dass**
a) die Heizeinrichtung (5) mehrere **stabförmige, orthogonal zur Längserstreckung der Retorte ausgerichtete** Heizelemente (6) aufweist, die im ersten Volumenraum (4) mittels im Ofengehäuse (2) eingelassener, verschließbarer erster Öffnungen (2.1) mindestens einzeln austauschbar angeordnet sind und
b) eine zweite Umwälzeinrichtung (18.2) zur Umwälzung der Luft im ersten Volumenraum (4) vom Ofengehäuse (2) aufgenommen und mittels verschließbarer zweiter Öffnung (23) als Baueinheit austauschbar angeordnet ist, wobei
c) die Heizelemente (6) und die zweite Umwälzeinrichtung (18.2) in einer eine gleichmäßige Wärmeübertragung zur Retorte (3) führenden Anordnung im ersten Volumenraum (4) aufgenommen sind.

2. Retortenofen nach Anspruch 1, **dadurch gekennzeichnet, dass** die Heizelemente (6) eine den Durchmesser der Retorte (3) übersteigende Längserstreckung aufweisen.

3. Retortenofen nach Anspruch 1 **oder 2**, **dadurch gekennzeichnet, dass** die Heizelemente (6) mit Bezug auf ihre Längserstreckung einen ungeheizten wie mittleren Bereich (11) aufweisen.

4. Retortenofen nach einem der Ansprüche 1 bis **3, dadurch gekennzeichnet, dass** mindestens zwei Heizelemente (6) je Längsseite der Retorte (3) vorgesehen sind.

5. Retortenofen nach einem der Ansprüche 1 bis **4 dadurch gekennzeichnet, dass** die zweite Umwälzeinrichtung (18.2) ein Umwälzaggregat (19) und eine Leiteinrichtung (20) aufweist.

6. Retortenofen nach einem der Ansprüche 1 bis **5, dadurch gekennzeichnet, dass** die Leiteinrichtung (20) in einer mit Bezug auf die Längserstreckung der Retorte (3) gerichteten Querumwälzung der Luft im ersten Volumenraum (4) bewirkenden Anordung steht.

## Claims

1. Electrically heated retort furnace (1) for thermal treatment of metallic workpieces,
• having a thermally insulated furnace housing (2) enclosing a first volume space (4), with heating device (5) for the retort (3) and a first circulation device (18.1) within the retort,
• wherein the retort (3) surrounded by the first volume space (4) encloses a second volume space (17) receiving the protective- and reaction gases, which is closable gas-tight by means of a door for the feeding of a batch (14) of workpieces, as a treatment- or batch space for the thermal treatment of the workpieces located on a batch holding fixture,
**characterized in that**
a) the heating device (5) has several **rod-shaped,** heating elements (6) **aligned orthogonally to the longitudinal extension of the retort,** which are arranged at least individually exchangeable in the first volume space (4) by means of closable first openings (2.1) embedded in the furnace housing (2) and
b) a second circulation device (18.2) for circulating the air is mounted in the first volume space (4) of the furnace housing (2) and by means of a closable second opening (23) is arranged exchangeably as a unit, wherein
c) the heating element (6) and the second circulation device (18.2) are mounted in an arrangement in the first volume space (4) guiding a uniform heat transfer to the retort (3).

2. A retort furnace according to claim 1 **characterized in that** the heating elements (6) have a longitudinal extension exceeding the diameter of the retort (3).

3. A retort furnace according to claim 1 or 2, **characterized in that** with respect to their longitudinal extension the heating elements (6) have an unheated and central area (11).

4. A retort furnace according to claims 1 to 3, **characterized in that** at least two heating elements (6) are provided per long side of the retort (3).

5. A retort furnace according to one of claims 1 to 4, **characterized in that** the second circulation device (18.2) has a circulation aggregate (19) and a control system (20).

6. A retort furnace according to one of claims 1 to 5, **characterized in that** the control system (20) is in an arrangement causing cross circulation of the air in the first volume space (4), directed with respect to the longitudinal extension of the retort (3).

## Revendications

1. Four à cornue (1) à chauffage électrique, destiné au traitement thermique de pièces métalliques,
- comportant un carter (2) à isolation thermique, entourant une première enceinte volumétrique (4) et muni d'un dispositif de chauffage (5) pour la cornue (3), et un premier dispositif de circulation (18.1) à l'intérieur de la cornue,
- la cornue (3), entourée par la première enceinte volumétrique (4), entourant une deuxième enceinte volumétrique (17) recevant les gaz de protection et les gaz de réaction, apte à être fermée par une porte pour le chargement d'une charge (14) de pièces et constituant une enceinte de traitement ou de charge pour le traitement thermique des pièces disposées sur un dispositif de réception des charges,
**caractérisé en ce que**
a) le dispositif de chauffage (5) comporte plusieurs éléments chauffants (6) en forme de baguettes, qui sont orientés orthogonalement à la dimension longitudinale de la cornue et qui sont disposés, de manière au moins individuellement amovible, dans la première enceinte volumétrique (4) au moyen de premières ouvertures (2.1), ménagées dans le carter (2) du four et aptes à être fermées, et
b) un deuxième dispositif de circulation (18.2), qui permet la circulation de l'air dans la première enceinte volumétrique (4), est logé dans le carter (2) du four et est monté de manière amovible en tant que module au moyen de deuxièmes ouvertures (23) aptes à être fermées,
c) lesdits éléments chauffants (6) et le deuxième dispositif de circulation (18.2) étant logés dans la première enceinte volumétrique (4) selon un agencement assurant une transmission homogène de la chaleur vers la cornue (3).

2. Four à cornue selon la revendication 1, **caractérisé en ce que** les éléments chauffants (6) ont une dimension longitudinale supérieure au diamètre de la cornue (3).

3. Four à cornue selon la revendication 1 ou 2, **caractérisé en ce que** les éléments chauffants (6) comportent, par référence à leur dimension longitudinale, une zone (11) centrale et non chauffée.

4. Four à cornue selon l'une quelconque des revendications 1 à 3, **caractérisé en ce qu'**il est prévu au moins deux éléments chauffants (6) sur chaque côté longitudinal de la cornue (3).

5. Four à cornue selon l'une quelconque des revendications 1 à 4, **caractérisé en ce que** le deuxième dispositif de circulation (18.2) comporte un groupe de circulation (19) et un dispositif de guidage (20).

6. Four à cornue selon l'une quelconque des revendications 1 à 5, **caractérisé en ce que** le dispositif de guidage (20) est disposé dans un agencement induisant une circulation transversale, par référence à la dimension longitudinale de la cornue (3), de l'air dans la première enceinte volumétrique (4).
